# EUROPEAN PATENT APPLICATION

(11) **EP 0 590 993 A1**
(43) Date of publication of application: **06.04.1994**
(21) Application number: 93307800.8
(22) Date of filing: 30.09.1993
(51) Int. Cl.: F16B 37/08, B60N 3/06

(54) **Structure for mounting box member**

(30) Priority: 30.09.1992 JP 68151/92
(71) Applicant: EMHART INC., Newark, Delaware 19711 (US)
(72) Inventor: Shibuya, Tomio 803 Sola Heights Azusa, Utsunomiya City Tochigi-Ken (JP)
(74) Representative: Stagg, Diana Christine

(57) **Abstract**

Provides a structure for mounting a box member such as a footrest which needs no inlets of clip guides on the top surface of footrest and which is capable of accommodation variation, if any, in the distance between two attaching stud bolts, i.e. a structure to mount a footrest (1) on a panel (10) by the use of two spaced stud bolts (11 and 12) attached to and projecting from the panel and two clips (2), two attached to the footrest with a similar distance therebetween. The clips (2) are attached unrotatably to clip guides (8, 9) provided in sides (6, 7) of the footrest (1) and clip-mounting holes of the clip guides are elongated to absorb an error in the distance between the stud bolts, being so arranged that the clips can be attached respectively to the centres of the elongated clip-mounting holes.

## Description

The present invention relates to a structure for mounting a box member such as a footrest to a panel such as a vehicle body by the use of two spaced apart stud bolts attached to and projecting from the panel and two similarly spaced clips attached to the box member.

A structure is known for mounting a box member such as a footrest to a panel such as a vehicle body by the use of two stud bolts attached to and projecting from the panel with a predetermined distance therebetween and two clips attached to the box member with a similar predetermined distance therebetween, for example, as disclosed by Japanese U.M.Publication No. 62-156040. This mounting structure is advantageous in that it can mount a footrest on a panel simply by pressing clips attached to guides extending from the stepping surface, i.e., the top surface of the footrest, over stud bolts on the panel, and that it can retain a carpet by means of a flange on the lower end side of the footrest.

In the prior known structure for mounting a footrest mentioned above, clip guides extend downwardly from the top surface (stepping surface) of a box member and clips are attached to the clip guides when the clips are pressed down over the clip guides. This has the advantage that if the clips are rotated in the direction in which they are loosened from the bolts by vibrations of the vehicle body or the like, they are pressed down again when a foot is put on the footrest and so prevented from falling off the clip guides. To attach clips by pressing them down from the top surface as stated above, however, the footrest has to be constructed so that the heads of the clips are inset into the top surface (stepping surface) of the footrest lest they should obstruct feet put on the surface and in order to avoid accumulation of mud or dust, and the configuration of the inset of each clip guide on the top surface of the footrest has to be formed precisely.

Further, should there be a discrepancy in the distance between two stud bolts or between two clip guides in this prior known structure for mounting a footrest, one of the two clips can be properly attached to a stud bolt but the other cannot be properly matched with the other stud bolt corresponding to it, causing the clip or the footrest to be deformed, or to leave the footrest incompletely attached and attached at only one point.

Accordingly, the present invention aims to provide a structure for mounting a box member such as a footrest which does not require clip guide inlets on the top surface of footrest and can accommodate some variation in the distance between two stud bolts.

According to the present invention, there is provided a structure for mounting a box member such as a footrest on a panel such as a vehicle body by the use of two spaced apart stud bolts attached to and projecting from the panel and two similarly spaced clips attached to the box member characterised in that each clip is attached unrotatably to a clip guide provided on a side of the box member, and at least one clip-mounting hole of the clip guide is made in an elongated shape so as to accommodate any variation in the distance between the stud bolts, centring means provided in the elongated hole and/or a clip so as to position the clip in the centre of the elongated clip-mounting hole.

In order that the invention can be better understood, preferred embodiments will now be described in greater detail by way of example with reference to the accompanying drawings in which:
Figure 1 is a plan view of a footrest as a box member according to the present invention;
Figure 2 is a front view of the footrest of Figure 1;
Figure 3 is a left side view of the footrest of Figure 1;
Figure 4 is a right side view of the footrest of Figure 1;
Figure 5 is a sectional view taken along line A-A of Figure 1;
Figure 6 is an illustrative drawing showing a clip guide used in a structure for mounting box member according to the present invention;
Figure 7 is a front view of a first embodiment clip used in a structure for mounting box member according to the present invention;
Figure 8 is a plan view of the clip of Figure 7;
Figure 9 is a bottom view of the clip of Figure 7;
Figure 10 is a sectional view taken along line B-B of Figure 7;
Figure 11 is a schematic drawing showing the relationship between a clip-mounting hole of the clip guide and the shank of a clip of Figure 7;
Figure 12 is a drawing showing the clip shank out of position in its attachment to the clip-mounting hole;
Figure 13 is an illustrative drawing showing how the clip may be attached to a stud bolt;
Figure 14 is a sectional view of a second embodiment clip used in the structure for mounting box member according to the present invention, together with a mounting hole in a box member;
Figure 15 is a bottom view of the clip of Figure 14 and the corresponding mounting hole of the box member,
Figure 16 is a sectional view taken along line C-C of Figure 15, and
Figure 17 is a drawing showing the shank of the clip of Figure 14 out of position in its attachment to the clip-mounting hole.

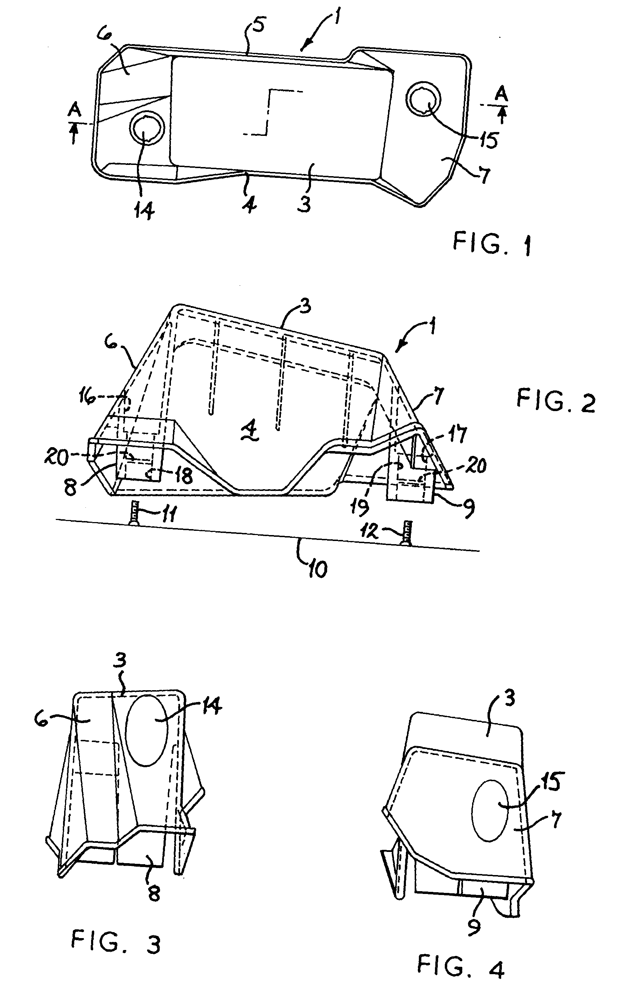

Referring to the drawings, footrest (1) according to the present invention is a box member comprising a top surface (3) to serve as the surface to put feet on, namely, the stepping surface, front and back sides (4 and 5) and left and right sides (6 and 7), the four sides supporting the top surface (3). The lower end of each side is formed to match the configuration of a substrate panel such as a vehicle body, or a carpet. According to the present invention, clip guides (8 and 9) are provided on two sides facing each other (the left and right sides 6 and 7 in the drawings - instead of in the top surface (3) of the box member as in the prior art). As shown in Figure 2, the clip guides (8 and 9) are provided in positions corresponding to two stud bolts (11 and 12) which are welded to and project from a panel (10) such as a vehicle body with a predetermined distance between them.

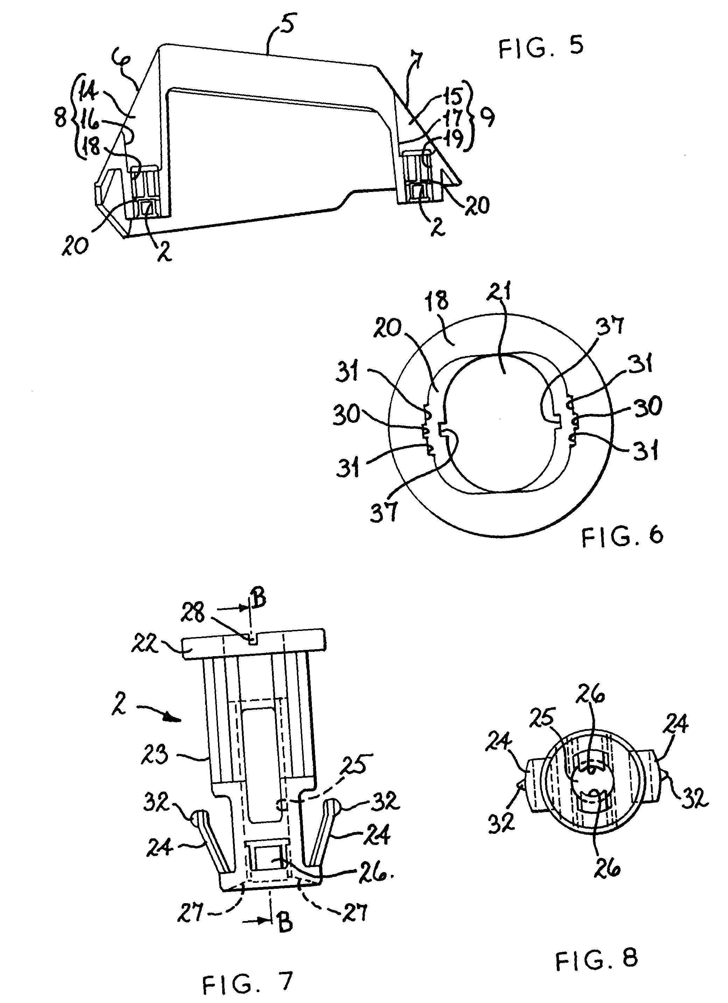

Since the clips (2) (see Figure 5) can be attached when they are pressed downward from the top surface, the clip guides (8 and 9) have inlets (14 and 15) on sides (6 and 7). Below inlets (14 and 15), large diameter cylinders (16 and 17) are formed to receive the heads of clips, and below the large diameter cylinders, small diameter cylinders 18 and 19 are formed to receive the shanks of clips. The small diameter cylinders (18, 19) are formed with circumferential shoulders (20) to engage with the clips so as to prevent them from falling off, and with grooves (which are described later) to engage with the clips so as to prevent them rotating. Clip-mounting holes (21) of the small diameter cylinders (18, 19) are formed in an elongated shape as shown in Figure 6. The grooves and the clip-mounting holes are described later in greater detail. Clip-mounting holes (21) are means for accommodating variations in the distance between the stud bolts (11, 12). They may be formed in both the small diameter cylinders (18, 19) as illustrated or in only either one of them.

As shown in Figures 7 to 10, the clip (2) has a large diameter head (22), a small diameter shank (23) and engagement pawls (24) provided at an end portion on the far side of the head (22). The shank (23) is formed with a hollow (25) which opens to the side provided with the engagement pawls (24) and receives the shank of the stud bolt (11) or (12). The hollow (25) is provided with engagement pawls (26) to engage with a thread of the stud bolt (11 or 12). The opening of the hollow (25) is formed with a tapered surface (27) to have an increased diameter to facilitate the capture of the end of stud bolt (11 or 12). The head (22) is formed with a groove (23) to enable a tool to rotate the clip (2). the length of the shank (2) is determined correspondingly to the length of the clip guides (8 and 9) of the footrest (1). The ends of engagement pawls (24) engage with the circumferential shoulders (20) of the clip guides (8 and 9) to fix the clips (2) so as not to fall off.

The clip-mounting holes (21) passing through the clip guides (8 and 9) are elongated as mentioned earlier and the inside wall, to define each of the holes, is formed with a pair of vertical grooves (30) extending longitudinally, and on both sides of each of the vertical groove (30), recessed portions (31) are formed which are less deep than the vertical grooves (30). At the ends of the engagement pawls (24) of the clips (2), projections (32) are formed which each have a width to fit into one of the grooves (30). When the projections (32) of the engagement pawls of the clips fit into the vertical grooves (30) of the clip guides, the clips (2) are prevented from rotating relatively to clip guides (8 and 9) and it is ensured that the clips are not rotated in the direction in which they are loosened by vibrations of the vehicle body or the like. Because of the elongated shape of the clip-mounting holes (21), as shown in Figure 11, the clip (2) can take various positions longitudinally in the elongated hole with respect to the clip guide (8 or 9). In this case, the projections (32) at the ends of the engagement pawls (24) of the clips fit not only into grooves (30) but also into recessed portions (31) on both sides of the grooves and thus prevent the clip (2) from rotating.

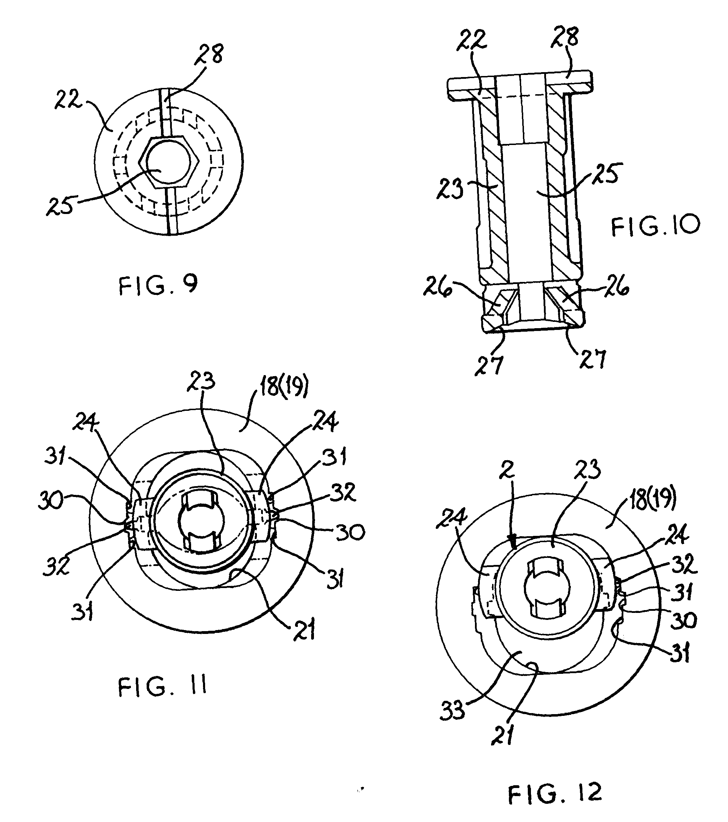

The clips (2) can take various positions shown in Figure 11 with respect to the clip mounting holes (21) as mentioned above. Accordingly, should there be a variation in the distance between the two stud bolts (11 and 12) (see Figure 2), the positions of the clips (2) can be changed to accommodate this variation. As the clips (2) can be attached to different positions with respect to the clip guides, it is possible to place each of them in the position shown in Figure 12 from the beginning. If this is done, however, a large space (33) is produced between the shank (23) of the clip (2) and the inside wall of the clip mounting hole (21). The large space (33) may cause defective attachment of the clip to the stud bolt (11) (or 12) as the space tends to guide the end of the stud bolt.

Therefore, according to the present invention, the clips (2) are placed so that the projections (32) of the engagement pawls (24) of the clips initially fit into the vertical grooves (30) of the clip guides (8 and 9). In other words, the projections (32) at the ends of engagement pawls (24) of the clips (2) function as centering means capable of attaching the clips respectively in the centres of the clip guides. As long as the clips (2) are attached to the centres of the clip mounting holes (21) of the clip guides, the centering means may be provided either in the clip mounting holes (21) or the clip shanks.

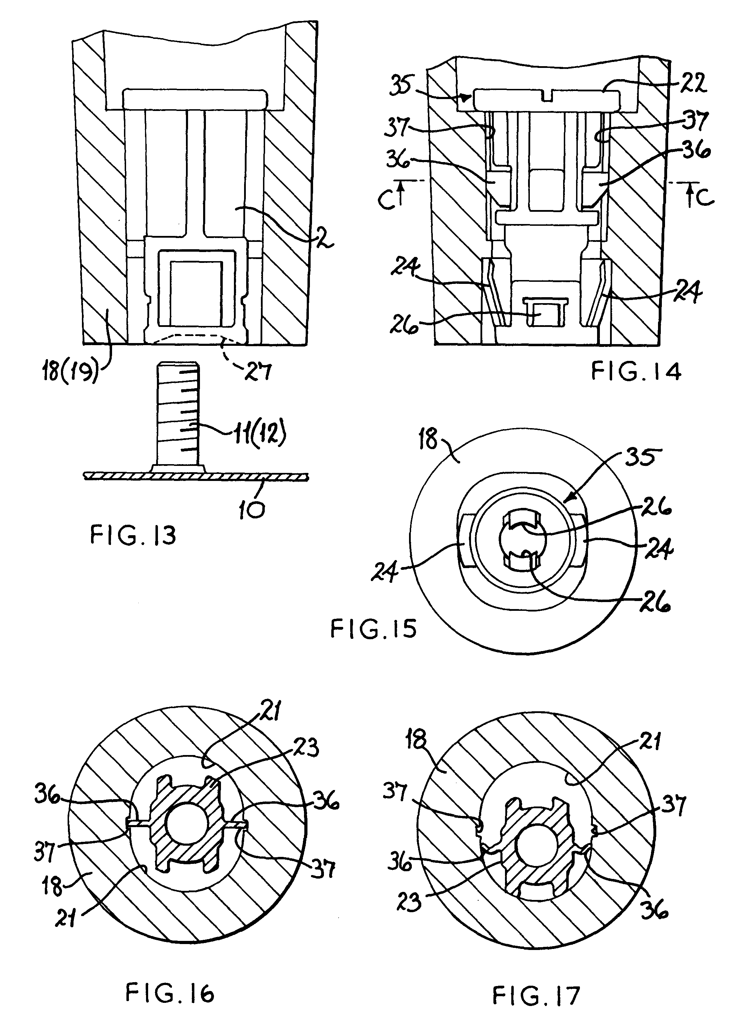

As described above, the projections (32) of the clip engagement pawls (24) fit into the vertical grooves (30) of the clip guides (8 and 9) to position the clips (2) initially in the centres of the clip-mounting holes (21) of the clip guides without producing the spaces (33) (see Figure 12). In the case where clip (2) is held out of position with respect to the stud bolt (11) or the (12) as shown in Figure 13, upon pressing the footrest to press the clip (2) over the stud bolt (11 or 12), the tapered surface (27) in the inlet of the hollow (25) of the clip (2) comes into contact with the end of the stud bolt and the clip (2) moves within the clip-mounting hole (21) of the clip guide as shown in Figure 11 so that it can be attached in a proper attitude relative to the stud bolt.

Figures 14 through 17 show a second embodiment clip according to the present invention. In this clip (35), a pair of thin plate-like projections (36) are formed on the sides of the shank (23) heightwise in the middle of the shank replacing the projections (32) formed at the ends of the engagement pawls (24) of the first clip (2) shown in Figure 7. As all the other portions of the clip (35) are the same as those of the first clip (2), their function is not repeated. Since projections (36) are in a plate-like form, they have a resiliency which permits them to bend radially inwardly. The second clip (35) eliminates the need to form the vertical grooves (30) below the shoulders (20) of the clip mounting holes (21) in the small cylinders (18 and 19) and the recessed portions (31) on both sides of the vertical grooves (see Figure 15). The clip (35) is centred in and attached to the mounting hole (21) by means of the projections (36) thereof, making use of vertical grooves (37) formed above the shoulder (20) of the mounting hole (21) as shown in Figures 16 and 6. The projections (36) in engagement with the mounting hole (21) also function to prevent the clip from rotating. With the second clip (35), too, should the stud be out of position as shown in Figure 17, the projections (36) bend radially inwardly with respect to the shank (23) to engage with the clip-mounting hole (21) so that the clip can be attached to the stud bolt in its proper position. Thus, compared to the first clip (2), the configuration of a clip-mounting hole for the second clip (35) is simplified, its centering is carried out even more reliably and the space (33) shown in figure 12 can be further reduced.

With the present invention, the clips are attached unrotatably to clip guides provided on sides of a box member, and at least one clip-mounting hole of the clip guides is elongated so as to accommodate any variation in the distance between the stud bolts. In order to attach clips to the centres of the elongated clip-mounting holes, centering means are provided in the elongated holes and/or in the clips. Therefore, the present invention provides simplified moulding and reduces contamination on the top surface of a footrest, prevents mud or the like from accumulating thereon, accommodates variation, if any, in the distance between two stud bolts, and facilitates the attachment of clips to the stud bolts in their proper attitude thus enabling the box member to be mounted on a panel reliably and in its proper position and attitude.

## Claims

1. A structure for mounting a box member such as a footrest on a panel such as a vehicle body by use of spaced two apart stud bolts attached to and projecting from the panel and two similarly spaced clips attached to the box member, characterized in that each clip is attached unrotatably to a clip guide provided on a side of the box member, and at least one clip-mounting hole of the clip guide is made in an elongated shape so as to accommodate any variation in the distance between the stud bolts, centering means provided in the elongated hole and/or a clip so as to position the clip in the centre of the elongated clip-mounting hole.
